# EUROPÄISCHE PATENTSCHRIFT

(11) **EP 2 396 099 B1**
(45) Veröffentlichungstag und Bekanntmachung des Hinweises auf die Patenterteilung: **27.11.2013**
(21) Anmeldenummer: 10704926.4
(22) Anmeldetag: 16.02.2010
(51) Int. Cl.: B01D 35/18, B01D 46/42, F02M 37/22

(54) **VORRICHTUNG ZUM ERWÄRMEN VON FLÜSSIGKEITEN**
DEVICE FOR HEATING LIQUIDS
DISPOSITIF DE CHAUFFAGE DE LIQUIDES

(30) Priorität: 16.02.2009 DE 102009009067
(43) Veröffentlichungstag der Anmeldung: 21.12.2011
(73) Patentinhaber: Mann + Hummel GmbH, 71638 Ludwigsburg (DE)
(72) Erfinder: FRANZ, Andreas, 71638 Ludwigsburg (DE); STRIEBICH, Rolf-Thorsten, 70806 Kornwestheim (DE)
(86) Internationale Anmeldenummer: PCT/EP2010/051891
(87) Internationale Veröffentlichungsnummer: WO 2010/092178

(56) Entgegenhaltungen:
- WO-A1-2004/023845
- DE-A1- 2 721 607
- DE-A1- 3 418 831
- DE-A1-102006 014 171
- US-A1- 2006 157 393

## Beschreibung

### Technisches Gebiet

Die Erfindung betrifft eine Vorrichtung zum Erwärmen von Fluiden insbesondere flüssigen Brenn- oder Kraftstoffen oder gasförmigen Stoffen, wie beispielsweise der Ansaugluft von Brennkraftmaschinen, nach dem Oberbegriff von Anspruch 1.

### Stand der Technik

Eine Vorrichtung zum Erwärmen von Fluiden ist beispielsweise aus der US 4,866,250 bekannt. Diese Vorrichtung besitzt einen von der zu erwärmenden Flüssigkeit durchströmten Wärmetauscher in dem ein flächenförmiger Heizraum ausgebildet ist, der mindestens einseitig von einer Wärme leitenden Wand abgeschlossen ist. Die Wärmequelle ist ein über die Wärme leitende Wand sich erstreckendes Heizelement, das mit der Wand in unmittelbarem Kontakt steht.

Es ist ferner aus der DE 3 532 243 eine Vorrichtung zum Anwärmen von Flüssigkeiten, insbesondere zum Vorwärmen von flüssigen Brenn- oder Kraftstoffen bekannt mit einem Wärme isolierenden Außenmantel und einem an dessen Innenfläche vorgesehenen Flächenheizelement als Wärmequelle. Der Außenmantel ist ein formbeständiger Isoliermantel auf dessen Innenfläche das Flächenheizelement befestigt ist. Das Flächenheizelement weist eine zerreißfeste Kontaktfläche auf.

Weiterhin beschreibt die WO 07020179 eine Filtereinrichtung, insbesondere für Kraftstoff, wobei ein Filterelement in einem Filtergehäuse angeordnet ist und eine Heizung zum Erwärmen von durch die Filtereinrichtung strömendem Medium mit einer Heizbahn in einem Gehäuse befestigt ist. Die Heizbahn weist an ihrem Endbereich einen elektrischen Kontakt auf, der die Heizbahn vernietet. Eine gattungsgemäße Vorrichtung ist z. B. aus der DE 34 18 831 A1, DE 27 21 607 A1 sowie aus der US 2006/0157393 A1 bekannt. Des Weiteren beschreibt die DE 10 2006 014 171 A1 einen beidseitig mit Folie isolierten Flächenheizer, der ein leitfähiges Cellulosevlies aufweist, zu dessen Herstellung Cellulose mit einer Leitfähigkeit erhöhenden Komponente wie z. B. Leitfähigkeitsruß oder Kohlenstoff-Nanotubes oder Metallpartikel im Nanobereich aufgelöst und versponnen wird.

Der Erfindung liegt die Aufgabe zugrunde, die Erwärmung von Fluiden, wie etwa Kraftstoffen oder anderen Stoffen zu optimieren und gleichzeitig die Energie, die zur Erwärmung der Fluide erforderlich ist, zu reduzieren.

### Offenbarung der Erfindung

Diese Aufgabe wird durch die Merkmale des unabhängigen Anspruchs 1 gelöst. Bei Filtereinrichtungen für Flüssigkeiten, insbesondere für Kraftstoff, Schmieröl, Harnstoff oder Wasser ist es erforderlich, die Flüssigkeit bei Temperaturen unterhalb des Gefrierpunkts soweit aufzuwärmen, dass diese eine Viskosität aufweist, die es erlaubt, die Flüssigkeit durch das Filtermedium hindurch zu bewegen und damit auch zu filtrieren.

Für gasförmige Fluide, wie beispielsweise der Ansaugluft einer Brennkraftmaschine oder der Frischluft für den Innenraum eines Kraftfahrzeuges ist eine Erwärmung des Fluides zum Betrieb in einem optimalen Betriebspunkt oder zur Verbesserung des Komforts der Insassen eines Fahrzeuges erforderlich.

Ist, wie aus dem Stand der Technik bekannt, eine Heizung oder eine Heizbahn am Gehäuse eines Filtersystems angeordnet, wird diese Heizung zunächst das Gehäuse erwärmen, anschließend das im Gehäuse vorhandene Fluid und über das Fluid, aufgrund von Wärmeübertragung das im Gehäuse angeordnete Filtermedium.

Erst wenn dieses Filtermedium die erforderliche Temperatur aufweist, kann beispielsweise eine Flüssigkeit mit temperaturabhängiger Viskosität, wie Kraftstoff, insbesondere Diesel, durch das Filtermedium hindurch filtriert werden.

Die Erfindung gemäß dem Anspruch 1 verbessert die Filtrationseigenschaft und insbesondere verkürzt die Erfindung die Erwärmungszeit, die erforderlich ist, um das Filtermedium und das am Filtermedium befindliche Fluid auf die erforderliche Temperatur zu erwärmen. Dadurch wird eine extrem kurze Erwärmungszeit erzielt, da ein Aufwärmen eines Gehäuses oder eine Wärmeübertragung von einem am Gehäuse angeordneten Heizsystem bis hin zum Filtermedium nicht erforderlich ist. Darüber hinaus entsteht ein Selbstregeleffekt, da der Bereich der nicht durchströmt wird, sich stärker erwärmt. Die Heizung selbst besteht gemäß einer Ausgestaltung der Erfindung aus Kohlenstoff-Nanoröhren (Carbon Nanotubes, kurz CNT), die entweder auf dem Filtermedium aufgebracht werden oder im Filtermedium integriert sind. Die Kohlenstoff-Nanoröhren sind als Widerstandsheizung einsetzbar. Das Ein- und Aufbringen der Kohlenstoff-Nanoröhren kann als Füllstoff oder als Farbe/Beschichtung erfolgen. Selbstverständlich können diese auch durch einen Druckprozess z.B. einem Sieb- oder Tintenstrahldruck auf das Filtermedium aufgebracht werden. Als alternative Verfahren zum Aufbringen der Kohlenstoff-Nanoröhrchen sind ein Tauchen des Filtermediums in einer Dispersion, das Besprühen des Filtermediums oder das Durchströmen des Filtermediums mit einer Dispersion vor der Faltung des Filtermediums bekannt. Es besteht auch die Möglichkeit, bei der Herstellung der Filtermediummasse, d.h. eines Faserbreies, diese Kohlenstoff-Nanoröhren einzubringen, beispielsweise durch Einrühren in den Filterpapierbrei. Nach der Trocknung des Faserbreies wird das Filtermedium kontaktiert d.h. mit elektrischen Kontakten versehen. Zum Aufheizen des Filtermediums wird eine Spannung an den elektrischen Kontakten aufgebracht.

Bevorzugt für eine Pkw Bordspannung sind 6 bis 16 Volt und für eine Lkw Bordspannung 16 bis 32 Volt. Geeignet sind auch andere Spannungen für Sonderanwendungen wie Elektrofahrzeuge oder Fahrzeuge mit einem 42 Volt Bordnetz.

Auch bei dem Auftragen der Kohlenstoff-Nanoröhren auf ein Filtermedium wird nach Abschluss des Auftragvorgangs die Kontaktierung erfolgen. Diese Kontaktierung kann beispielsweise aus Kupferklammern oder Aluminiumklammern bestehen, die mit einer Stromversorgung elektrisch leitend verbunden sind.

Die Kontaktierung des Filtermediums kann in einer weiteren Ausführungsform über die Endscheiben des Filterelementes erfolgen, indem die Endscheiben aus zumindest teilweise hochleitfähigem Kunststoff, beispielsweise mit einer spezifischen Leitfähigkeit höher 10⁴ Sm⁻¹ hergestellt sind und in Kontakt mit dem Filtermedium durch Infrarot- oder Spiegelschweißen verbunden sind oder an dieses angespritzt sind.
Die Kontaktierung des Filtermediums über die Endscheiben kann über eine induktive Erwärmung der Endscheibe erfolgen zur Herstellung eines Formschlusses mit dem Filtermedium oder durch eine Erwärmung des Kunststoffes während des Durchleitens hoher elektrischer Energie.
In einer weiteren Ausführungsform ist eine Endscheibe aus einem leitfähigen Metall vorgesehen.

In einer anderen vorteilhaften Ausführungsform sind die Endscheiben in einem Zweikomponenten-Spritzgussverfahren, dem Fachmann als 2K-Kunststoffsspritzgusstechnik bekannt, hergestellt oder im Monosandwich-Verfahren hergestellt, um weniger leitfähiges Material zu verwenden und/oder eine bessere Verarbeitbarkeit zu erzielen.
In dieser Ausführungsform wird elektrisch leitfähiger Kunststoff spiralförmig oder in durchkontaktierten Ringen in einem wenig oder gar nicht leitenden Kunststoff im 2K-Verfahren eingebettet oder umspritzt.
Vorteile eines Filterelementes mit Kunststoffendscheiben sind eine rückstandsfreie thermische Nutzung der beladenen Elemente am Ende ihre Nutzungsdauer.

In einer weiteren vorteilhaften Ausgestaltung der Erfindung bestehen die Endscheiben aus Kunststoffmaterial, das um einen elektrischen Leiter aus einem Nicht-Kunststoff Material, beispielsweise Metall, gespritzt ist. So ist mit kostengünstigen Materialien eine in zumindest bestimmten Bereichen leitfähige Endscheibe ausgebildet. Der in die Spritzgussform eingelegte Leiter kann beispielsweise als Spirale oder in durchkontaktierten Ringen ausgebildet sein.

Ein Filtermedium mit einer Heizeinrichtung kann in verschiedenen Filterbauarten zur Anwendung kommen. Ein gefaltetes Medium wird in Flachfiltern oder bei Verbindung der Endfalten in Rund- oder Sternfiltern verwendet, wobei zick-zackförmig gefaltete Flachfilter beispielsweise als Ansaugluftfilter oder Innenraumluftfilter eingesetzt sind und Rundfilter vorzugsweise für Kraftstoff- und Ölfilter verwendet werden.

Als alternative Bauform kann das Filtermedium mit der Heizeinrichtung einen Wickel- oder Kompaktfilter bilden, insbesondere bei Ansaugluftfiltern, bei dem eine gewellte Filterbahn mit einer glatten Filterbahn verbunden wird und die zwei wechselseitig an Rand verschlossenen Filterbahnen anschließend aufgerollt sind.

Zum rechtzeitigen Erwärmen des Filtermediums und des umgebenen Fluids beim Unterschreiten einer definierten Temperatur ist ein Temperatursensor innerhalb der Filtereinrichtung vorgesehen, der für das Schalten der Heizeinrichtung zuständig ist.

Diese und weitere Merkmale gehen nicht nur aus den Ansprüchen sondern auch aus der Figurenbeschreibung und den Figuren hervor.

### Kurze Beschreibung der Zeichnungen

Die Erfindung wird nachfolgend Anhand eines Ausführungsbeispiels näher erläutert. Es zeigt:

Fig. 1 ein Filterelement in einer perspektivischen Ansicht

Fig. 2 ein sternförmig zusammengefalteter Faltenfilter, der aus einer Filterbahn gemäß Fig. 1 durch Zusammenrollen und Verschweißen der seitlichen Kantenbereiche hergestellt wird.

Fig.3 ein Rundfilterelement mit einem Faltenfilter ähnlich Fig.2 mit elektrisch leitfähigen Kunststoffendscheiben

### Ausführungsform(en) der Erfindung

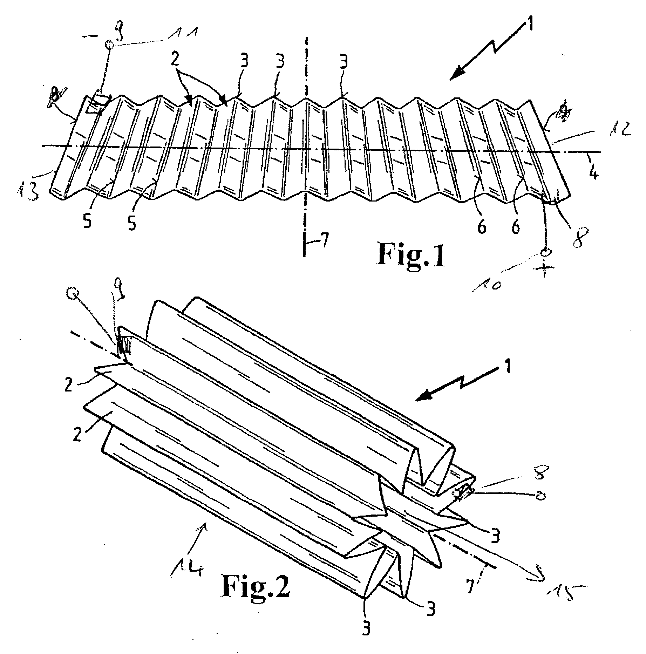

Das in Figur 1 dargestellte Filterelement 1 ist ein ebenes blockförmiges Filterelement bestehend aus einer Filterbahn 2 mit darin eingebrachten Falten 3, die zueinander parallel verlaufen. Dargestellt ist eine Achse 4, wobei sich die Falten 3 quer zur Achse 4 erstrecken. Definiert werden die Falten 3 durch untere Faltenkanten 5 und obere Faltenkanten 6, die parallel zueinander verlaufen und einander abwechseln. Bei der Achse 4 handelt es sich um eine quer zu den Faltkanten verlaufende Achse. Das Einbringen der Falten und die Transportrichtung der Filterbahnen verlaufen entlang der Achse 7. Als Material für das Filterelement wird ebenso natürliches oder synthetisches Filtermaterial verwendet, beispielsweise Filtermaterial auf Zellulosebasis. Das Filtermaterial ist weich und nachgiebig ausgebildet und besitzt auf seiner dargestellten Oberfläche eine Beschichtung aus Kohlenstoff-Nanoröhren. Die Beschichtung ist dabei so gewählt, dass die gesamte Schicht von einem Kontaktierungselement 8 bis hin zu einem Kontaktierungselement 9 einen elektrischen Widerstand im Bereich von 0,1 bis 100 Ohm aufweist, wodurch aufgrund der KFZ-Batteriespannung eine Leistung von 100 bis1500 Watt erreicht wird. Sofern eine elektrische Spannung an den Anschlüssen 10 und 11 ansteht wird das gesamte Filterelement erwärmt. Dies führt dazu - sofern das Filterelement von Kraftstoff oder einer anderen Flüssigkeit umgeben ist - dass dieser Kraftstoff oder diese Flüssigkeit ebenfalls erwärmt wird und bei Erreichen einer bestimmten Temperatur von einem festen Aggregatszustand in einen flüssigen Aggregatszustand übergeleitet wird und damit eine Filtration des zu filtrierenden Mediums möglich ist.

Ist das Filterelement von einem gasförmigen Fluid, wie beispielsweise der Ansaugluft eines Verbrennungsmotors oder der Frischluft für den Innenraum eines Kraftfahrzeuges umgeben, wird dieses beim Durchströmen des Filtermediums erwärmt ohne den Aggregatzustand zu ändern.

Die Kontaktierung des Filtermaterials kann auch durch eine, sich über die gesamte Länge des Filters erstreckende Kontaktfläche, beispielsweise ein flächiges Material mit einer hohen elektrischen Leitfähigkeit oder einem Metallstreifen erfolgen, insbesondere einem elektrisch leitfähigen Seitenband an den Längsseiten oder an den Stirnseiten der Filterbahn 2.

Figur 2 zeigt ein weiteres Ausführungsbeispiel eines Faltenfilters 1. Dieser Faltenfilter ist als sternförmiges, holzylindrisches Element ausgeführt, das zweckmäßig aus dem ebenen Filterelement 1 nach Fig. 1 durch Zusammenrollen hergestellt wird. Hierbei werden die in Fig. 1 dargestellten seitlichen Kantenbereiche 12 und 13 übereinandergelegt und miteinander verbunden, insbesondere miteinander verklebt oder verschweißt. Im zusammengerollten und verbundenen Zustand gemäß Fig. 2 verlaufen die Falten 3 in Richtung der Längsachse 7 des Elements 1. Das zu filtrierende Fluid strömt gemäß dem Pfeil 14 von außen auf den Faltenfilter, durchströmt das Filtermedium und tritt im Inneren gemäß dem Pfeil 15 aus und strömt nach außen ab.

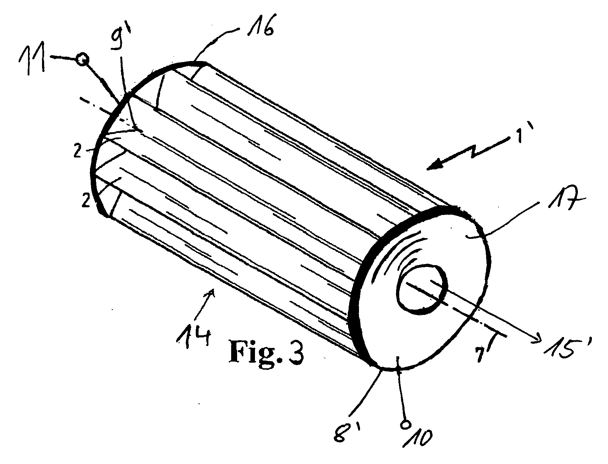

Figur 3 zeigt ein weiteres Ausführungsbeispiel eines Faltenfilters 1' in Form eines Rundfilterelementes. Dieser Rundfilter ist durch Zusammenrollen der Faltenbahnen und dem Verbinden mit jeweils einer Endscheibe an den Stirnseiten hergestellt. Das zu filternde Fluid strömt gemäß dem Pfeil 14' von außen auf den Faltenfilter, durchströmt das Filtermedium und tritt im Inneren gemäß dem Pfeil 15' aus und strömt nach außen ab. Bei einem sternförmig gefalteten hohlzylindrischen Element besteht die Möglichkeit, die Kontaktierung beispielsweise über entsprechende Endscheiben 16, 17 an dem Filterelement durchzuführen Die Beschichtung ist dabei so gewählt, dass sich die gesamte Schicht von einer Endscheibe 16 mit einem Kontaktierungselement 9' zu einer zweiten Endscheibe 17 mit einem Kontaktierungselement 8' erstreckt. Sofern eine elektrische Spannung an den Anschlüssen 10' und 11' ansteht wird das gesamte Rundfilterelement erwärmt. Als Material für die Endscheiben 16, 17 eignet sich zum Beispiel thermoplastischer Kunststoff wie hochleitungsfähiges Polyamid. Die Kontaktierung kann alternativ auch mit Metallscheiben oder Metallfolien gebildet werden, die eine flächige Übertragung des Heizstroms ermöglichen.

Gerade bei der Filtration von Dieselkraftstoff besteht die Gefahr, dass dieser ab einer bestimmten Grenztemperatur parafiniert und damit eine Filtration nicht mehr möglich ist. Durch das Aufheizen des Kraftstoffs über die Kohlenstoff-Nanoröhren bzw. die Beschichtung des Filtermediums durch die Kohlenstoff-Nanoröhren werden die Parafine die sich ab einer bestimmten Grenztemperatur bilden, aufgelöst und die Filtration ist wiederum möglich.

Der Vorteil bei der Verwendung von Kohlenstoff-Nanoröhren gegenüber der Verwendung üblicher Kohlenstofffasern liegt in der erhöhten Leitfähigkeit dieser Röhren. Dies bedeutet, dass zur Erzielung eines bestimmten elektrischen Widerstandes wesentlich weniger Kohlenstoffmasse erforderlich ist als bei üblichen Kohlenstofffasern.

Die Erfindung kann auch bei Luftfiltersystemen verwendet werden. Dort hat die Erwärmung durch die Kohlenstoff-Nanoröhren das Ziel, die das Filtermedium durchströmende Luft zu temperieren und damit zusätzliche Heizeinrichtungen zu vermeiden.

## Patentansprüche

1. Vorrichtung zum Erwärmen von Fluiden mit einer von dem zu erwärmenden Fluid durchströmten Heizeinrichtung, wobei diese Heizeinrichtung auf einem Filtermedium angeordnet ist, und wobei das Filtermedium zur Filtrierung der Fluide vorgesehen ist, **dadurch gekennzeichnet, dass** die Heizeinrichtung Kohlenstoff-Nanoröhren sind, welche auf dem Filtermedium als Schicht oder in dem Filtermedium als Einlage vorgesehen sind, und wobei an den Kohlenstoff-Nanoröhren über elektrische Kontaktierung eine elektrische Spannung angelegt ist.

2. Vorrichtung zum Erwärmen von Fluiden nach Anspruch 1, **dadurch gekennzeichnet, dass** die Heizeinrichtung auf einem gefalteten Filtermedium angeordnet ist, wobei das Filtermedium einen Flachfilter bildet.

3. Vorrichtung zum Erwärmen von Fluiden nach Anspruch 1, **dadurch gekennzeichnet, dass** die Heizeinrichtung auf einem gefalteten und an den Kantenbereichen miteinander verbundenen Filtermedium angeordnet ist, wobei das Filtermedium einen Rundfilter bildet.

4. Vorrichtung zum Erwärmen von Fluiden nach Anspruch 1, **dadurch gekennzeichnet, dass** die Heizeinrichtung auf einem gefalteten Filtermedium angeordnet ist, wobei das Filtermedium einen Wickel- oder Kompaktfilter bildet.

5. Vorrichtung zum Erwärmen von Fluiden nach einem der vorherigen Ansprüche, **dadurch gekennzeichnet, dass** die Kontaktierung der Heizeinrichtung auf dem Filtermedium über eine zumindest teilweise leitfähige Kunststoffendscheibe erfolgt.

6. Vorrichtung zum Erwärmen von Fluiden nach Anspruch 5, **dadurch gekennzeichnet, dass** die zumindest teilweise leitfähige Kunststoffendscheibe eine spezifische Leitfähigkeit größer 10⁴ Sm⁻¹ aufweist.

7. Vorrichtung zum Erwärmen von Fluiden nach Anspruch 5 oder 6, **dadurch gekennzeichnet, dass** die leitfähige Kunststoffendscheibe in Zweikomponenten-Spritzgussverfahren hergestellt ist.

8. Vorrichtung zum Erwärmen von Fluiden nach Anspruch 5 oder 6, **dadurch gekennzeichnet, dass** die leitfähige Kunststoffendscheibe in einem Monosandwich-Verfahren hergestellt ist.

9. Vorrichtung zum Erwärmen von Fluiden nach einem der vorherigen Ansprüche, **dadurch gekennzeichnet, dass** das das Filtermedium durchströmende Fluid eine Flüssigkeit ist, insbesondere Kraftstoff, Harnstoff oder Schmieröl.

10. Vorrichtung zum Erwärmen von Fluiden nach einem der Ansprüche 1 bis 8, **dadurch gekennzeichnet, dass** das das Filtermedium durchströmende Fluid ein Gas ist, insbesondere Ansaugluft einer Brennkraftmaschine oder Frischluft für den Innenraum eines Fahrzeuges.

## Claims

1. Apparatus for heating fluids with a heating apparatus flowed through by the fluid to be heated, this heating apparatus being disposed on a filter medium, and the filter medium being provided for filtering the fluids, **characterized in that** the heating apparatus consists of carbon nanotubes, which are provided as stratum on the filter medium or as insert in the filter medium, and a voltage being applied to the carbon nanotubes by an electrical contact.

2. Apparatus for heating fluids according to claim 1, **characterized in that** the heating apparatus is disposed on a folded filter medium, the filter medium forming a flat filter.

3. Apparatus for heating fluids according to claim 1, **characterized in that** the heating apparatus is disposed on a folded filter medium with the edges connected with each other, the filter medium forming a round filter.

4. Apparatus for heating fluids according to claim 1, **characterized in that** the heating apparatus is disposed on a folded filter medium, the filter medium forming a wound or compact filter.

5. Apparatus for heating fluids according to one of the above claims, **characterized in that** the contact of the heating apparatus on the filter medium is achieved by an at least partially conductive plastic end plate.

6. Apparatus for heating fluids according to claim 5, **characterized in that** the at least partially conductive plastic end plate features a specific conductivity higher than 10⁴ Sm⁻¹.

7. Apparatus for heating fluids according to claim 5 or 6, **characterized in that** the conductive plastic end plate is made by a two-component injection molding process.

8. Apparatus for heating fluids according to claim 5 or 6, **characterized in that** the conductive plastic end plate is made in by a monosandwich process.

9. Apparatus for heating fluids according to one of the above claims, **characterized in that** the fluid flowing through the filter medium is a liquid, in particular fuel, urea or lubricating oil.

10. Apparatus for heating fluids according to one of the claims 1 to 8, **characterized in that** the fluid flowing through the filter medium is a gas, in particular intake air of an internal combustion engine or fresh air for the passenger compartment of a vehicle.

## Revendications

1. Dispositif destiné à chauffer des fluides, avec un dispositif de chauffage parcouru par le fluide à chauffer, ce dispositif de chauffage étant disposé sur un milieu filtrant et le milieu filtrant étant destiné à filtrer les fluides, **caractérisé en ce que** le dispositif de chauffage est constitué de nanotubes de carbone qui sont disposés sur le milieu filtrant en tant que couche ou insert dans le milieu filtrant et une tension électrique étant appliquée par un contact électrique sur les nanotubes de carbone.

2. Dispositif destiné à chauffer des fluides selon la revendication 1, **caractérisé en ce que** le dispositif de chauffage est disposé sur un milieu filtrant plié, le milieu filtrant formant un filtre plat.

3. Dispositif destiné à chauffer des fluides selon la revendication 1, **caractérisé en ce que** le dispositif de chauffage est disposé sur un milieu filtrant plié dont les bords sont reliés les uns aux autres, le milieu filtrant formant un filtre rond.

4. Dispositif destiné à chauffer des fluides selon la revendication 1, **caractérisé en ce que** le dispositif de chauffage est disposé sur un milieu filtrant plié, le milieu filtrant formant un filtre enroulé ou compact.

5. Dispositif destiné à chauffer des fluides selon l'une des revendications précédentes, **caractérisé en ce que** le contact du dispositif de chauffage sur le milieu filtrant est réalisé au moyen d'un disque d'extrémité au moins en partie conducteur.

6. Dispositif destiné à chauffer des fluides selon la revendication 5, **caractérisé en ce que** le disque d'extrémité au moins en partie conducteur présente une conductibilité spécifique supérieure à 10⁴ Sm-¹.

7. Dispositif destiné à chauffer des fluides selon la revendication 5 ou 6, **caractérisé en ce que** le disque d'extrémité conducteur est fabriqué selon un procédé de moulage par injection à deux composants.

8. Dispositif destiné à chauffer des fluides selon la revendication 5 ou 6, **caractérisé en ce que** le disque d'extrémité conducteur est fabriqué selon un procédé monosandwich.

9. Dispositif destiné à chauffer des fluides selon l'une des revendications précédentes, **caractérisé en ce que** le milieu filtrant est un liquide, notamment du carburant, de l'urée ou de l'huile de lubrification.

10. Dispositif destiné à chauffer des fluides selon l'une des revendications précédentes 1 à 8, **caractérisé en ce que** le fluide qui parcoure le milieu filtrant est un gaz, notamment de l'air d'aspiration d'un moteur à combustion interne ou de l'air frais pour l'habitacle intérieur d'un véhicule automobile.
